# EUROPEAN PATENT SPECIFICATION

(11) **EP 1 665 697 B1**
(45) Date of publication and mention of the grant of the patent: **21.02.2007**
(21) Application number: 04783652.3
(22) Date of filing: 09.09.2004
(51) Int. Cl.: H04L 27/00

(54) **RADIO FREQUENCY SIGNAL DISCRIMINATION METHOD AND SYSTEM**
HOCHFREQUENZ-SIGNALDISKRIMINATIONSVERFAHREN UND SYSTEM
PROCEDE ET SYSTEME DE DISCRIMINATION DE SIGNAL DE RADIOFREQUENCE

(30) Priority: 19.09.2003 US 503904 P
(43) Date of publication of application: 07.06.2006
(73) Proprietor: Siemens VDO Automotive Corporation, Auburn Hills, Michigan 48326 (US)
(72) Inventor: SALOKA, Brian, Roseville, MI 48066 (US)
(74) Representative: Payne, Janice Julia
(86) International application number: PCT/US2004/029490
(87) International publication number: WO 2005/034457

(56) References cited:
- WO-A-02/066269
- US-A- 4 227 255

## Description

### TECHNICAL FIELD

The present invention is related to signal discrimination, and more particularly to discriminating among different types of radio frequency (RF) signals.

### BACKGROUND OF THE INVENTION

RF signals are used in many communication applications. A given application may require a receiver system that can receive both frequency-shift-keyed (FSK) modulated RF signals and amplitude-shift-keyed (ASK) modulated RF signals, but the specific modulation of a signal received at any given time can randomly change without warning. To accommodate both signal types, current applications incorporate two separate receivers, one to receive FSK signals and another to receive ASK signals. This undesirably increases the complexity of the application.

Document US 4 227 255 A (CARRICK ROBERT L ET AL) 7 October 1980 (1980-10-07), discloses (the references in parentheses applying to this document): a signal discrimination method comprising receiving a signal transmission; counting a number of pulses in the signal transmission by using a zero crossing circuit (see col. 5, lines 3-9) and integrating during a time window (see col. 6, lines 65-68); deciding that the signal transmission is a first type (ASK) when there are no zero crossings (equivalently, when the number of pulses is zero) (see col. 6, lines 39-43) and deciding that the signal is of a second type (SSB) when there are zero crossings (equivalently, number of pulses) within a predetermined range (in relation to the time window and the baud rate) (see col. 6, lines 48-51).

There is currently no way to detect and distinguish the difference between FSK and ASK modulated signals and to respond to the change in the modulation of a received signal.

### SUMMARY OF THE INVENTION

The present invention is directed to a signal detection and discrimination system that can discriminate between FSK signals and ASK signals and that can switch a signal receiver mode to accommodate the signal modulation type. In one embodiment, an ASK mode is the default mode. A given data input signal is evaluated in a first discrimination stage by counting edges, or pulses, in the signal over a selected time window. If the number of pulses within the time window fall within a valid range, it indicates that the signal is ASK modulated and that there is possible incoming data on the signal. If the number of pulses falls outside the valid range, the pulses are considered noise or data at a different baud rate.

If the data signal exhibits no pulses within the time window, it indicates that the data signal is FSK modulated and the receiver is switched to an FSK mode. The next FSK transmission is then received as incoming data. If the system does not see FSK data for a predetermined time period, the receiver is switched back to the ASK mode.

In one embodiment, the current consumption of the receiver can be reduced by running duty-cycle power to the receiver.

### BRIEF DESCRIPTION OF THE DRAWINGS

Figure 1 is a representative block diagram of the inventive system according to one embodiment of the invention;
Figure 2 is a flow diagram illustrating a method according to one embodiment of the invention;
Figure 3 is a signal timing diagram illustrating a first signal discrimination stage according to one embodiment of the invention;
Figure 4 is a signal timing diagram illustrating a signal receipt stage;
Figure 5 is a signal timing diagram illustrating a second signal discrimination stage according to one embodiment of the invention.

### DETAILED DESCRIPTION OF THE EMBODIMENTS

The invention generally performs two levels of discrimination. First, it conducts a counter discrimination step that count the number of pulses in an incoming transmission within a given window to distinguish between ASK and FSK modulated transmissions and to detect whether a given incoming transmission is noise or data at a baud rate that is different than the desired baud rate. Second, the invention conducts a pulse width discrimination step that measures the pulse widths of the first several half-bits of the incoming transmission. If the pulse widths of the measured half-bits are determined to be within a valid time interval for one or more desired baud rates, then the invention considers the incoming transmission to contain valid data.

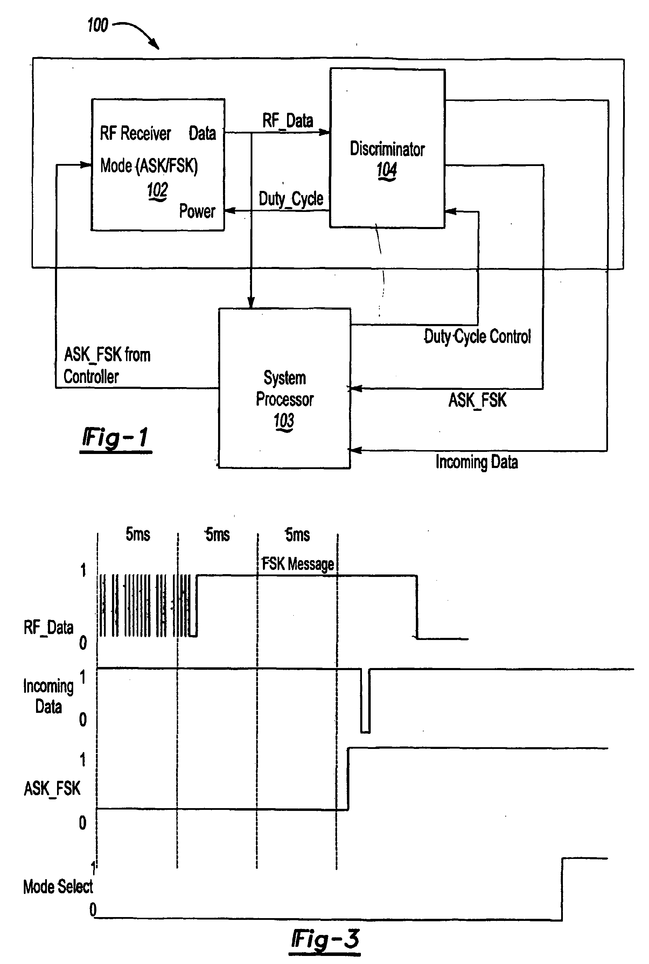

Figure 1 is a representative block diagram illustrating a signal receiving system 100 according to one embodiment of the invention.

The system 100 includes a signal receiver 102 that receives a radio frequency (RF) signal transmission. The receiver 102 communicates with a system processor 103, such as a main microcontroller. The signal can be an amplitude-shift-keyed (ASK) modulated signal or a frequency-shift-keyed (FSK) modulated signal. It is assumed that the modulation of the signal can change randomly at any time. The signal itself may be, for example, a Manchester-encoded or variable pulse width signal, where each data bit is represented by at least one bit transition (i.e., from 0 to 1 or from 1 to 0).

The receiver 102 sends RF data to a discriminator 104. The discriminator 104 acts as an event informer to the system processor 103, sending an incoming data signal pulse to the system processor 103 to indicate that a valid signal transmission has been detected. In the illustrated embodiment, the data signal is sent to the system processor 103 as long as the discriminator 104 detects a valid signal. In other words, the discriminator 104 acts an interface between the receiver 102 and the system processor 103 to inform the system processor 103 that data may be coming to the system processor 103. The actual configuration of any system processor 103 outside of the receiving system 100 can vary without departing from the scope of the invention.

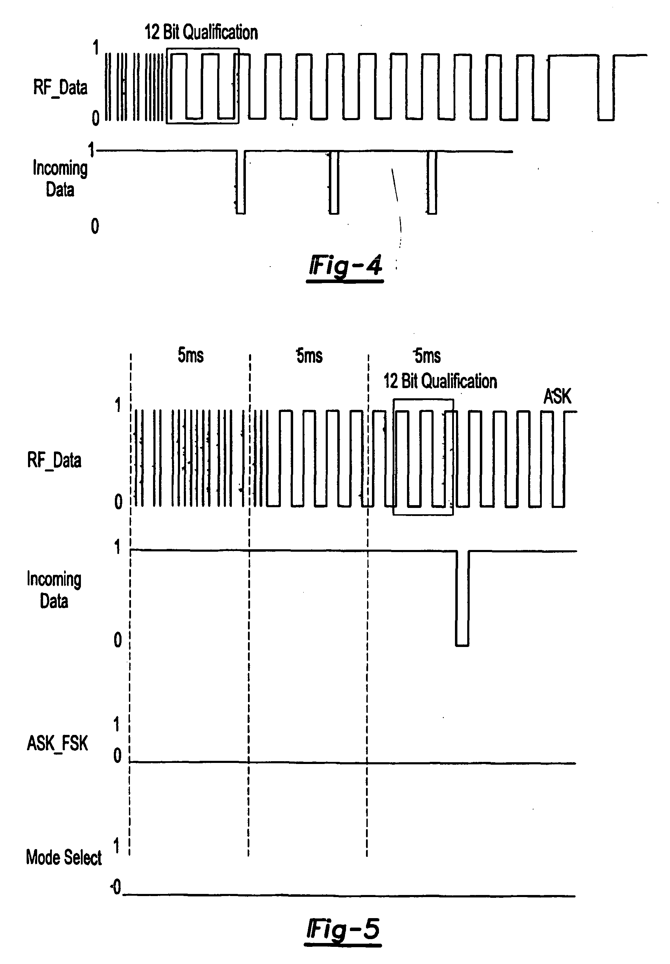

The discriminator 104 also sends an ASK_FSK indicator to the system processor 103 to indicate the modulation of the incoming transmission to that device. In the example shown in Figures 3 and 5, the ASK_FSK signal is low when the received data signal is ASK modulated and high when the received transmission is FSK modulated. The system processor 103 does the actual switching of the receiver 102 so that the receiver 102 is able to receive the ASK signal or FSK signal, depending on which type is being transmitted. Note that the discriminator 104 tells the system processor 103 whether a given received signal transmission is ASK or FSK modulated, while the system processor 103 instructs the receiver 102 to conduct the actual switching to the ASK mode or FSK mode.

As also shown in Figure 1, the discriminator 104 may receive a duty cycle control input from the system processor 103 and control the power sent to the receiver 102 to either provide power to the receiver 102 continuously or, alternatively, to duty-cycle the power to the receiver 102 to minimize current consumption when the receiver 102 is inactive.

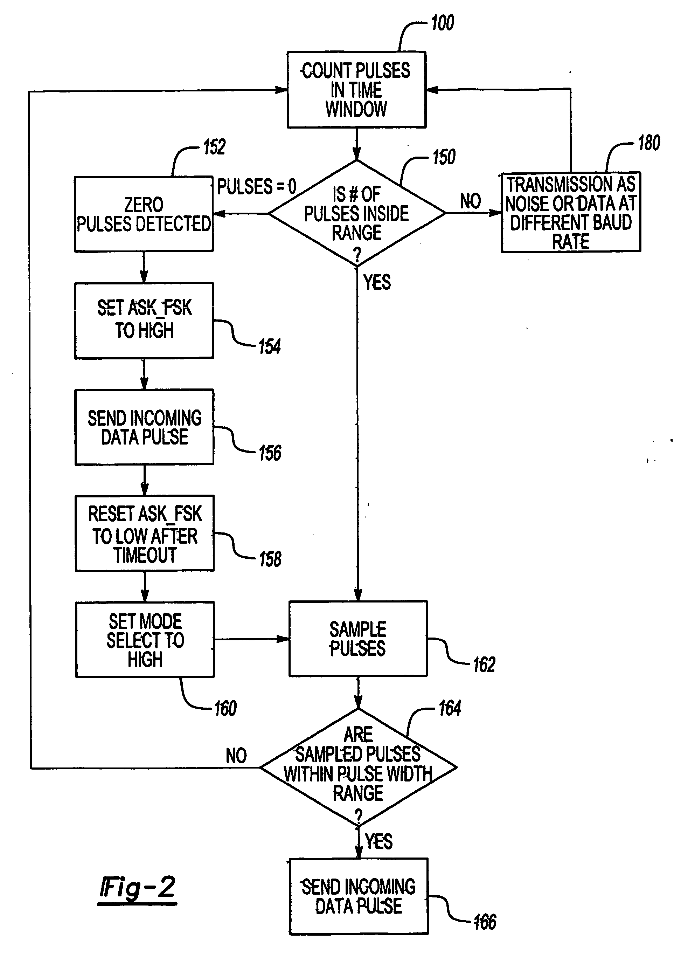

Figure 2 is a flow diagram illustrating a signal discrimination process according to one embodiment of the invention. In this embodiment, it is assumed that the system 100 idles in an ASK mode and receives and handles ASK modulated signals by default when the ASK_FSK indicator signal is low (Figure 3). The discriminator 104 first evaluates the incoming data signal received by the receiver 102 by counting the number of pulses in the signal within a selected time window (e.g., 5 ms) (block 150). The size of the time window itself can be selected based on, for example, baud rate, data protocol, noise frequency of the receiver 102, and other factors.

When the receiver 102 is in an ASK mode, a FSK modulated signal will look like one long, continuous pulse in the selected time window, as shown in Figure 3. As a result, the number of pulses counted in the time window when the FSK modulated signal is being received will be zero. If zero pulses are detected in the selected time window (block 152), the discriminator 104 will set the ASK_FSK signal to a high level (block 154) to indicate to the system processor 103 that the incoming data signal is FSK modulated. The discriminator 104 will also send an incoming data pulse to the system processor 103 to indicate that valid incoming data is being received (block 156). In one embodiment, the ASK_FSK signal resets itself by returning to a low level after a predetermined time-out period (block 158), even if the receiver 102 continues to receive FSK modulated signals.

Once the system processor 103 senses that the ASK_FSK signal indicates an FSK operating mode, the system processor 103 switches the receiver 102 to an FSK mode after a selected delay by setting a mode select signal to a high level in this example (block 160) When the system processor 103 has selected the FSK mode for the receiver 102, the receiver 102 is able to receive FSK modulated signals as data at any time. As long as the mode select signal sent to the receiver 102 is high, the receiver 102 will remain in the FSK mode. When the system processor 103 determines that there is no more FSK data being received (e.g., if no valid data bits are received after a selected timeout period), the system processor 103 switches the receiver 102 back to the ASK mode. At this point, the discrimination process starts over with the pulse counting step (block 110).

Referring to Figures 2 and 4, the discriminator 104 can qualify a portion of the incoming FSK data (e.g., the first two bits of data) via a pulse width discrimination step by sampling the high and low times of the first four half-bits (block 162). If the pulse widths of all four half-bits are within a selected valid time interval for the given baud rate or rates (block 164), the bits are qualified and the discriminator 104 sends the incoming data pulse to the system processor 103 to notify the system processor 103 that a valid signal has been detected (block 166). The discriminator 104 then continues to send the incoming data pulses as long as there is FSK data being sent to the receiver 102. If the half-bit qualification fails, the qualification process is restarted to the pulse counter step (block 110).

If the system processor 103 does not receive FSK data for a selected time period, the system processor 103 switches the mode select signal back to a low level, causing the receiver 102 to switch back to an ASK mode. The system processor 103 can detect this by qualifying incoming pulses with the known baud rate and encoding.

Referring to Figures 2 and 5, when the incoming transmission is ASK modulated, the counter discrimination step is conducted to determine whether the number of pulses in the time window is within a selected range (block 150). If it is, it indicates that the transmission may contain incoming ASK modulated data. The discriminator 104 then conducts the pulse width discrimination step in the same way as in the FSK case. More particularly, the discriminator 104 qualifies a selected number of bits by sampling the high and low times of, for example, four half-bits (block 162) and comparing the pulse widths of the four half-bits with a selected valid time interval (block 164). Note that the ASK and FSK qualifications will be different if the ASK and FSK baud rates and different.

If the pulse widths of the sampled bits are within a valid time interval for a given baud rate, then the discriminator 104 sends the incoming data pulse to the system processor 103 and continues to do so periodically as long as the receiver 102 is receiving ASK modulated data (block 166). The mode select signal from the system processor 103 to the receiver 102 in this case will stay at a low level because the receiver 102 is in an ASK mode and does not switch to the FSK mode.

If the number of pulses in the ASK modulated signal are outside of the selected range (block 150), the discriminator 104 treats the incoming transmission as noise or data at a different baud rate (block 180). At this point, the process is restarted at the pulse counter step (block 110).

As shown in Figure 1, the discriminator 104 may receive a duty cycle control signal from the system processor 103 to control the operation of the receiver 102. The duty cycle control signal enables or disables a duty cycle to the receiver 102. More particularly, the discriminator 104 turns the receiver 102 on continuously if the duty cycle control signal is cleared and turns the receiver 102 on and off according to a duty cycle of a pulse width modulated signal if the duty cycle control signal is set. Duty cycle control may be implemented while the system 100 is idle. By supplying power to the receiver 102 only intermittently when it is idle, the system processor 103 can reduce the total current consumption of the system.

By using a discriminator that discriminates between ASK and FSK modulated signals, the invention makes it possible to use a single receiver to handle both types of signals even when the modulation of a given input signal changes without advance warning. In addition to detecting the difference between FSK and ASK modulated signals, the invention can also determine whether an incoming signal contains valid data, such as Manchester or variable pulse width encoded data, at different baud rates.

It should be understood that various alternatives to the embodiments of the invention described herein may be employed in practicing the invention. It is intended that the following claims define the scope of the invention and that the method and apparatus within the scope of these claims be covered thereby.

## Claims

1. A signal discrimination method, comprising:
receiving a signal transmission;
counting a number of pulses in the signal transmission within a time window, wherein the signal transmission is a first type if the number of pulses in the window is zero and a second type if the number of pulses in the window is within a predetermined range; and
selecting a first receiving mode if the signal transmission is the first type and selecting a second receiving mode if the signal transmission is the second type.

2. The method of claim 1, wherein the first type is frequency-shift-keyed, FSK, modulated and the second type is amplitude-shift-keyed, ASK, modulated.

3. The method of claim 1, further comprising:
sampling a plurality of bits in the signal transmission;
comparing pulse widths of said plurality of bits with a selected time interval; and
sending an incoming data signal if the pulse widths are within the selected time interval.

4. A signal discrimination method, comprising:
receiving a signal transmission in a receiver and a discriminator;
counting a number of pulses in the signal transmission within a time window in the discriminator;
indicating that the signal transmission is frequency-shift-keyed, FSK, modulated if the number of pulses in the window is zero;
indicating that the signal transmission is amplitude-shift-keyed, ASK, modulated in the signal transmission if the number of pulses in the window is within a predetermined range; and
notifying a system processor of whether the signal transmission is ASK modulated or FSK modulated.

5. The method of claim 4, further comprising selecting a receiving mode in the receiver based on whether the signal transmission is ASK modulated or FSK modulated.

6. The method of claim 5, wherein the selecting step is conducted by a mode select signal sent to the receiver from the system processor.

7. The method of claim 4, wherein the selecting step is conducted by the system processor selecting a state of an indicator signal sent to the receiver.

8. The method of claim 4, further comprising:
sampling a plurality of bits in the signal transmission;
comparing pulse widths of said plurality of bits with a selected time interval; and
sending an incoming data pulse to the system processor if the pulse widths are within the selected time interval, indicating that the signal transmission contains valid data.

9. The method of claim 8, further comprising repeating the sending step as long as the receiver receives valid data.

10. The method of claim 4, further comprising selectively enabling a duty cycle to the receiver, wherein the receiver is powered continuously when the duty cycle is disabled and powered intermittently when the duty cycle is enabled.

11. A receiving system that evaluates a signal transmission, comprising:
a receiver that receives the signal transmission; and
a discriminator that discriminates the signal transmission by
counting a number of pulses in the signal transmission within a time window in the discriminator,
indicating that the signal transmission is frequency-shift-keyed, FSK, modulated if the number of pulses in the window is zero, and
indicating that the signal transmission is amplitude-shift-keyed, ASK, modulated if the number of pulses in the window is within a predetermined range, wherein the discriminator notifies a system processor of whether the signal transmission is ASK modulated or FSK modulated.

12. The receiving system of claim 11, wherein the receiver receives a mode select signal from the system processor based on whether the signal transmission is ASK modulated or FSK modulated.

13. The receiving system of claim 11, wherein the discriminator determines a presence of valid data in the signal transmission by
sampling a plurality of bits in the signal transmission;
comparing pulse widths of said plurality of bits with a selected time interval, and
sending an incoming data pulse to the system processor if the pulse widths are within the selected time interval, indicating that the signal transmission contains valid data.

14. The receiving system of claim 11, wherein the receiver is powered continuously when a duty cycle to the receiver is disabled and powered intermittently when the duty cycle is enabled.

## Patentansprüche

1. Verfahren zur Signaldiskrimination, welches umfasst:
Empfangen einer Signalübertragung;
Zählen einer Anzahl von Impulsen in der Signalübertragung innerhalb eines Zeitfensters, wobei die Signalübertragung von einem ersten Typ ist, wenn die Anzahl der Impulse in dem Fenster null ist, und von einem zweiten Typ, wenn die Anzahl der Impulse in dem Fenster innerhalb eines vorgegebenen Bereiches liegt; und
Wählen eines ersten Empfangsmodus, wenn die Signalübertragung vom ersten Typ ist, und Wählen eines zweiten Empfangsmodus, wenn die Signalübertragung vom zweiten Typ ist.

2. Verfahren nach Anspruch 1, wobei der erste Typ mittels Frequenzumtastung, FSK, moduliert und der zweite Typ mittels Amplitudenumtastung, ASK, moduliert ist.

3. Verfahren nach Anspruch 1, welches ferner umfasst:
Abtasten einer Vielzahl von Bits in der Signalübertragung;
Vergleichen der Pulsbreiten der besagten Vielzahl von Bits mit einem gewählten Zeitintervall; und
Senden eines Signals "ankommende Daten", falls die Pulsbreiten innerhalb des gewählten Zeitintervalls liegen.

4. Verfahren zur Signaldiskrimination, welches umfasst:
Empfangen einer Signalübertragung in einem Empfänger und einem Diskriminator;
Zählen einer Anzahl von Impulsen in der Signalübertragung innerhalb eines Zeitfensters in dem Diskriminator;
Anzeigen, dass die Signalübertragung mittels Frequenzumtastung, FSK, moduliert ist, falls die Anzahl der Impulse in dem Fenster null ist;
Anzeigen, dass die Signalübertragung mittels Amplitudenumtastung, ASK, moduliert ist, in der Signalübertragung, falls die Anzahl der Impulse in dem Fenster innerhalb eines vorgegebenen Bereiches liegt; und
Informieren eines Systemprozessors darüber, ob die Signalübertragung ASK-moduliert oder FSK-moduliert ist.

5. Verfahren nach Anspruch 4, welches ferner das Wählen eines Empfangsmodus in dem Empfänger in Abhängigkeit davon, ob die Signalübertragung ASK-moduliert oder FSK-moduliert ist, umfasst.

6. Verfahren nach Anspruch 5, wobei der Schritt des Wählens mittels eines Moduswahl-Signals durchgeführt wird, das von dem Systemprozessor an den Empfänger gesendet wird.

7. Verfahren nach Anspruch 4, wobei der Schritt des Wählens von dem Systemprozessor durchgeführt wird, indem er einen Zustand eines Indikatorsignals wählt, das an den Empfänger gesendet wird.

8. Verfahren nach Anspruch 4, welches ferner umfasst:
Abtasten einer Vielzahl von Bits in der Signalübertragung;
Vergleichen der Pulsbreiten der besagten Vielzahl von Bits mit einem gewählten Zeitintervall; und
Senden eines Impulses "ankommende Daten" an den Systemprozessor, falls die Pulsbreiten innerhalb des gewählten Zeitintervalls liegen, was anzeigt, dass die Signalübertragung gültige Daten enthält.

9. Verfahren nach Anspruch 8, welches ferner das Wiederholen des Schrittes des Sendens umfasst, solange der Empfänger gültige Daten empfängt.

10. Verfahren nach Anspruch 4, welches ferner das selektive Aktivieren eines Arbeitszyklus für den Empfänger umfasst, wobei der Empfänger ständig mit Strom versorgt wird, wenn der Arbeitszyklus deaktiviert ist, und mit Unterbrechungen mit Strom versorgt wird, wenn der Arbeitszyklus aktiviert ist.

11. Empfangssystem, welches eine Signalübertragung auswertet und welches umfasst:
einen Empfänger, welcher die Signalübertragung empfängt; und
einen Diskriminator, welcher die Signalübertragung diskriminiert durch
Zählen einer Anzahl von Impulsen in der Signalübertragung innerhalb eines Zeitfensters in dem Diskriminator,
Anzeigen, dass die Signalübertragung mittels Frequenzumtastung, FSK, moduliert ist, falls die Anzahl der Impulse in dem Fenster null ist, und
Anzeigen, dass die Signalübertragung mittels Amplitudenumtastung, ASK, moduliert ist, falls die Anzahl der Impulse in dem Fenster innerhalb eines vorgegebenen Bereiches liegt, wobei der Diskriminator einen Systemprozessor darüber informiert, ob die Signalübertragung ASK-moduliert oder FSK-moduliert ist.

12. Empfangssystem nach Anspruch 11, wobei der Empfänger ein Moduswahl-Signal von dem Systemprozessor empfängt, das darauf beruht, ob die Signalübertragung ASK-moduliert oder FSK-moduliert ist.

13. Empfangssystem nach Anspruch 11, wobei der Diskriminator ein Vorhandensein von gültigen Daten in der Signalübertragung bestimmt durch
Abtasten einer Vielzahl von Bits in der Signalübertragung;
Vergleichen der Pulsbreiten der besagten Vielzahl von Bits mit einem gewählten Zeitintervall; und
Senden eines Impulses "ankommende Daten" an den Systemprozessor, falls die Pulsbreiten innerhalb des gewählten Zeitintervalls liegen, was anzeigt, dass die Signalübertragung gültige Daten enthält.

14. Empfangssystem nach Anspruch 11, wobei der Empfänger ständig mit Strom versorgt wird, wenn ein dem Empfänger zugeführtes Arbeitszyklus-Steuersignal deaktiviert ist, und mit Unterbrechungen mit Strom versorgt wird, wenn der Arbeitszyklus aktiviert ist.

## Revendications

1. Procédé de discrimination de signaux, consistant
à recevoir une transmission de signaux ;
à compter un nombre d'impulsions dans la transmission de signaux à l'intérieur d'une fenêtre temporelle, la transmission de signaux étant d'un premier type si le nombre d'impulsions dans la fenêtre est de zéro et d'un second type si le nombre d'impulsions dans la fenêtre est situé dans une fourchette prédéterminée, et
à sélectionner un premier mode de réception si la transmission de signaux est du premier type et à sélectionner un second mode de réception si la transmission de signaux est du second type.

2. Procédé selon la revendication 1, dans lequel le premier type est modulé par déplacement de fréquence, MDF, et le second type est modulé par déplacement d'amplitude, MDA.

3. Procédé selon la revendication 1, consistant par ailleurs à :
échantillonner une pluralité de bits dans la transmission de signaux ;
comparer des largeurs d'impulsion de ladite pluralité de bits avec un intervalle de temps sélectionné, et
envoyer un signal de données entrantes si les largeurs d'impulsion se situent dans l'intervalle de temps sélectionné.

4. Procédé de discrimination de signaux, consistant à :
recevoir une transmission de signaux dans un récepteur et un discriminateur ;
compter un nombre d'impulsions dans la transmission de signaux à l'intérieur d'une fenêtre temporelle dans le discriminateur ;
indiquer que la transmission de signaux est modulée par déplacement de fréquence, MDF, si le nombre d'impulsions dans la fenêtre est de zéro ;
indiquer que la transmission de signaux est modulée par déplacement d'amplitude, MDA, dans la transmission de signaux si le nombre d'impulsions dans la fenêtre se situe dans une fourchette prédéterminée, et
notifier à un processeur système si la transmission de signaux est modulée par MDA ou modulée par MDF.

5. Procédé selon la revendication 4, consistant par ailleurs à sélectionner un mode de réception dans le récepteur selon que la transmission de signaux est modulée par MDA ou modulée par MDF.

6. Procédé selon la revendication 5, dans lequel l'étape de sélection est réalisée par un signal de sélection de mode envoyé au récepteur depuis le processeur système.

7. Procédé selon la revendication 4, dans lequel l'étape de sélection est exécutée par le processeur système en sélectionnant un état d'un signal indicateur envoyé au récepteur.

8. Procédé selon la revendication 4, consistant par ailleurs :
à échantillonner une pluralité de bits dans la transmission de signaux ;
à comparer les largeurs d'impulsion de ladite pluralité de bits avec un intervalle de temps sélectionné, et
à envoyer une impulsion de données entrantes au processeur système si les largeurs d'impulsion se situent dans l'intervalle de temps sélectionné, ce qui indique que la transmission de signaux contient des données valides.

9. Procédé selon la revendication 8, consistant par ailleurs à répéter l'étape d'envoi aussi longtemps que le récepteur reçoit des données valides.

10. Procédé selon la revendication 4, consistant par ailleurs à activer sélectivement un rapport cyclique pour le récepteur, le récepteur étant alimenté en puissance de façon continue lorsque le rapport cyclique est désactivé et alimenté en puissance de façon intermittente lorsque le rapport cyclique est activé.

11. Système de réception qui évalue une transmission de signaux, comprenant :
un récepteur qui reçoit la transmission de signaux, et
un discriminateur qui discrimine la transmission de signaux :
en comptant un nombre d'impulsions dans la transmission de signaux à l'intérieur d'une fenêtre temporelle dans le discriminateur ;
en indiquant que la transmission de signaux est modulée par déplacement de fréquence, MDF, si le nombre d'impulsions dans la fenêtre est de zéro, et
en indiquant que la transmission de signaux est modulée par déplacement d'amplitude, MDA, si le nombre d'impulsions dans la fenêtre se situe dans une fourchette prédéterminée, le discriminateur notifiant au processeur système si la transmission de signaux est modulée par MDA ou modulée par MDF.

12. Système de réception selon la revendication 11, dans lequel le récepteur reçoit du processeur système un signal de sélection de mode selon que la transmission de signaux est modulée par MDA ou modulée par MDF.

13. Système de réception selon la revendication 11, dans lequel le discriminateur détermine la présence de données valides dans la transmission de signaux :
en échantillonnant une pluralité de bits dans la transmission de signaux ;
en comparant les largeurs d'impulsion de ladite pluralité de bits avec un intervalle de temps sélectionné, et
en envoyant une impulsion de données entrantes au processeur système si les largeurs d'impulsion se situent dans l'intervalle de temps sélectionné, ce qui indique que la transmission de signaux contient des données valides.

14. Système de réception selon la revendication 11, dans lequel le récepteur est alimenté en puissance de façon continue lorsqu'un rapport cyclique pour le récepteur est désactivé et alimenté en puissance de façon intermittente lorsque le rapport cyclique est activé.
